Europäisches Patentamt

(19) European Patent Office (11) Publication number: **0 125 226**

Office européen des brevets **B1**

(12) **EUROPEAN PATENT SPECIFICATION**

(45) Date of publication of patent specification: **05.08.87** (51) Int. Cl.⁴: **C 04 B 11/00, C 09 D 5/34**

(21) Application number: **84850142.5**

(22) Date of filing: **02.05.84**

(54) **A filling composition.**

(30) Priority: **06.05.83 SE 8302593**

(43) Date of publication of application:
**14.11.84 Bulletin 84/46**

(45) Publication of the grant of the patent:
**05.08.87 Bulletin 87/32**

(84) Designated Contracting States:
**AT BE CH DE FR GB IT LI LU NL SE**

(56) References cited:
**DE-A-1 920 465**
**DE-A-2 609 124**
**DE-B-2 330 728**
**SE-A-8 102 117**
**SE-B- 306 384**
**SE-B- 316 552**
**SE-B- 386 432**
**US-A-3 906 083**
**US-A-4 286 995**

(73) Proprietor: **Boliden Aktiebolag**
**Box 5508**
**S-114 85 Stockholm (SE)**

(72) Inventor: **Hoppe, Carl Axel Gustaf**
**Gästabudsvägen 4**
**S-221 54 Lund (SE)**
Inventor: **Persson, Lars-Erik Herbert**
**Alegatan 26**
**S-252 60 Helsingborg (SE)**

(74) Representative: **Lundin, Björn-Eric**
**Boliden Aktiebolag Patents and Trade Marks**
**Box 81550**
**S-104 82 Stockholm (SE)**

EP 0 125 226 B1

Courier Press, Leamington Spa, England.

# 0 125 226

**Description**

Technical field

The present invention relates to a filling composition containing a filler which comprises calcium sulphate anhydrite and a liquid.

The object of the invention is to provide a substantially shrink-free filling composition for the purpose of rationalizing the work of filling cracks, smoothing surfaces and the like in different structures, such as building structures and wooden objects.

Background art

When treating the walls of new building structures, for example in the erection of new buildings, prior to painting and/or wall-papering the walls, and when renovating old walls prior to applying fresh paint and wall-paper it is known to fill in cracks and hollows etc., so as to obtain a smooth undersurface. To this end there is used a product which, although containing no sand, is called a sand-filler. It is a matter of fact that when a filler is applied too thickly, the filler will shrink excessively and will sink and/or move away from the surfaces defining the crack or hollow. Furthermore, the applied filler will often crack quite profusely, when drying out. This means that the crack or hollow must be built-up gradually, with a multiplicity of superposed filler layers, if a satisfactory finish is to be obtained. The work of filling such cracks and hollows is done manually and is consequently very expensive. Moreover, such work is extremely time demainding and can delay completion of the preparation work by several days, since the filler is slow to dry out.

Consequently, there is a need for a filling composition, which exhibits the minimum shrinkage tendencies, and which will dry out more quickly than known filling compositions.

Description of the present invention

It has now surprisingly been found possible to produce, in accordance with the invention, a filling composition which will fulfil these needs. According to the invention, this composition is characterized by a mixture of calcium sulphate-dihydrate and calcium sulphate-anhydrite in ratios of 90—65:10—35, to which there is added water or an aqueous solution in an amount of 50—110 parts by weight per 100 parts by weight of calcium-sulphate mixture.

Other characterizing features of the invention are set forth in the following claims.

The calcium sulphate-dihydrate used may either be in the form of particulate dihydrate gypsum or acicular dihydrate gypsum, so-called fibrous gypsum.

Dihydrate fibrous gypsum can be produced by dissolving gypsum to saturation in a sulphuric acid solution containing 5—15% $H_2SO_4$ at an elevated temperature of 70—100°C, whereafter the saturated solution is permitted to cool to ambient temperature, to crystallize-out acicular calcium sulphate-dihydrate crystals, having lengths of 10—100 μm and thicknesses of about 1 μm, whereafter the crystals are isolated and dried.

The anhydrite gypsum, which is present in particle form, with a particle size of less than 30 μm, more often 2—15 μm, is prepared by dissolving dihydrate gypsum and/or hemihydrate gypsum to supersaturation in heated sulphuric acid solution having a concentration greater than 35% $H_2SO_4$, whereafter the anhydrite gypsum is permitted to precipitate, and is then isolated.

The particulate anhydrite gypsum can also be replaced with an anhydrite fibrous gypsum, in which case the dihydrate gypsum should be present in particle form. Such anhydrite fibres can be produced by calcining acicular α-hemihydrate gypsum crystals, these being obtained by oxidizing calcium sulphite-hemihydrate (DE—A—26 13 651).

In order to obtain a higher setting effect, i.e. a shorter setting time, 4% potassium sulphate and/or ammonium sulphate calculated on the amount of gypsum used can be mixed in. In this case, the potassium sulphate and/or some other hardening salt, such as aluminium sulphate, is suitably dissolved in the water used for preparing the paste/composition.

It has showed particularly preferable to use phosphoric acid as a corrosion inhibitor, when an acidic hardening agent is used. One known disadvantage with prior known and used filling materials in that nails and screws coming into contact with the filling material will rust and thereby miscolour the filling material and/or any wall paper or paint covering it.

The amount of phosphoric acid used is depending on the pH of the gypsum used. Thus, phosphoric acid can be added to a pH of down to 3, but an adjustment of pH down to 4—5 is often enough.

In order to increase the ability of the composition to adhere to the surfaces to which it is applied, wood fibres, for example in the form of groundwood pulp (WP) can be incorporated in the composition. These wood fibres will also bind the gypsum to some extent.

The wood pulp is suitably added in an amount of up to 1% of the amount of gypsum used.

For the purpose of inhibiting the setting reaction and of controlling the same, a polyelectrolyte, such as polyamide resin, can be incorporated in the composition. One such suitable product in this respect is BOZEFLOC®, which is mixed with the composition in an amount of up to 1% of the amount of gypsum used. The polyelectrolyte is suitably contained in the aforementioned aqueous solution which, as beforementioned, may also contain potassium sulphate. The groundwood pulp may also be incorporated in the aqueous solution.

2

For the purpose of preventing attack by mould fungi, a suitable fungicide can be added, such as sorbic acid or sodium bensoate or some other suitable fungicid.

Instead of using a polyelectrolyte, or in combination therewith, cellulose starch, microcrystalline cellulose, carboxyethyl cellulose and hydroxyethyl cellulose can be admixed in the composition, such as MODOCOLL®.

In such cases, a carrier in the form of dolomite line may be admixed with the composition.

When wishing to produce a fine filler, a suitable water-based acrylate pigment and/or latex pigment can be used as a base.

Example

A dry mixture was prepared from 65 g calcium sulphate dihydrate and 35 g of calcium sulphate (anhydrite) having a particle size 2—20 µm. 80 ml of a 1%-BOZEFLOC®-solution containing 1.5 g of potassium sulphate were added to this mixture. The total mixture was carefully stirred to form a smooth paste.

The shrinkage tendencies of this filling composition were tested in an annular test mould having an inner diameter of 45 mm and a height of 10 mm. Two commercially available products A and B were also tested for comparison purposes, the product B being a so-called latex filler.

| Product | Shrinkage in mm Diameter mm | Height mm | Comments |
|---|---|---|---|
| According to Example | <0.5 | 0 | No comments |
| A | 5 | 1 | Cracks in centre Distorted finish |
| B | 7 | 2 | Cracks at the edges Distorted finish |

The dihydrate gypsum used in the above example can be replaced with a dihydrate fibrous gypsum, which affords slightly stronger binding properties and produces a more porous product.

The anhydrite enables a coarse-grain composition of dihydrate gypsum to be used, while still obtaining a highly smooth composition.

The cellulose, the groundwood pulp, can be admixed with the substance above, whereupon the substance would adhere more strongly to paper, board and wood.

The polyelectrolyte increases the smoothness of the composition, and enables a plastics trowel to be used, without the composition adhering thereto.

One advantage afforded by the filling composition according to the invention is that it is not sensitive to temperature, i.e. its drying rate is not affected by the ambient temperature.

During the reaction between dihydrate gypsum and any potassium sulphate present water is formed and absorbed by the anhydrite gypsum, to cause swelling, which is one reason why the composition exhibjts reduced shrinkage tendencies.

The filling composition dries to form a hard surface, which can readily be smoothed down.

**Claims**

1. A filling composition containing a filler comprising calcium sulphate anhydrite and a liquid, optionally in combination with additional additives, characterized by a mixture of calcium sulphate-dihydrate and calcium sulphate-anhydrite in the ratios of 90—65:10—35, to which there is added water or an aqueous solution in an amount of 50—110 ml $H_2O$ per 100 g of gypsum mixture.

2. A filling composition according to claim 1, characterized in that potassium sulphate, ammonium sulphate, aluminium sulphate and/or some other hardening salt is included in an amount of up to 4% calculated on the amount of gypsum present.

3. A filling composition according to claim 1, characterized in that it includes a wood-fibre substance in an amount of up to 1% of the amount of gypsum present.

4. A filling composition according to claim 1, characterized in that a polyelectrolyte and/or a cellulose starch product is included in an amount of up to 1% calculated on the amount of gypsum present.

5. A filling composition according to claim 1, characterized in that the dihydrate gypsum is present, either wholly or partially, in the form of acicular dihydrate gypsum crystals, and in that the anhydrite gypsum is present in particle form.

6. A filling composition according to claim 1, characterized in that the aqueous solution is present in the form of a water-based acrylate pigment.

7. A filling composition according to claim 1, characterized in that the dihydrate gypsum is present in particulate form; and in that the anhydrite gypsum is present, either totally or partially, in the form of acicular crystals.

8. A filling composition according to claims 1—2 characterized in that phosphoric acid is added to a pH of 3—5.

**Patentansprüche**

1. Füllmasse mit einem Gehalt eines Füllstoffes, der Calciumsulfat-Anhydrit und eine Flüssigkeit, gegebenenfalls in Kombination mit weiteren Zusatzstoffen enthält, gekennzeichnet durch ein Gemisch von Calciumsulfatdihydrat und Calciumsulfat-Anhydrit in den Verhältniss von 90—65:10—35, wozu Wasser oder eine wäßrige Lösung in einer Menge von 50 bis 110 $H_2O$ je 100 g Gipsgemisch zugesetzt ist.

2. Füllmasse nach Anspruch 1, dadurch gekennzeichnet, daß Kaliumsulfat, Ammoniumsulfat, Aluminiumsulfat und/oder irgendein anderes härtendes Salz in einer Menge von bis zu 4%, berechnet auf die vorhandene Gipsmenge, enthalten ist.

3. Füllmasse nach Anspruch 1, dadurch gekennzeichnet, daß sie eine Holzfasersubstanz in einer Menge von bis zu 1% der vorhandenen Gipsmenge enthält.

4. Füllmasse nach Anspruch 1, dadurch gekennzeichnet, daß sie einen Polyelektrolyten und/oder ein Cellulosestärkeprodukt in einer Menge von bis zu 1%, berechnet auf die vorhandene Gipsmenge, enthält.

5. Füllmasse nach Anspruch 1, dadurch gekennzeichnet, daß der Dihydratgips entweder insgesamt oder teilweise in der Form von nadelförmigen Dihydratgipskristallen vorliegt und daß der Anhydritgips in Teilchenform vorliegt.

6. Füllmasse nach Anspruch 1, dadurch gekennzeichnet, daß die wäßrige Lösung in der Form eines Acrylatpigmentes auf Wasserbasis vorliegt.

7. Füllmasse nach Anspruch 1, dadurch gekennzeichnet, daß der Dihydratgips in feinteiliger Form vorliegt und daß der Anhydritgips entweder insgesamt oder teilweise in der Form von nadelförmigen Kristallen vorliegt.

8. Füllmasse nach Anspruch 1 und 2, dadurch gekennzeichnet, daß Phosphorsäure bis zu einem pH von 3 bis 5 zugesetzt ist.

**Revendications**

1. Composition de mastic, contenant un mastic constitué par de l'anhydrite de sulfate de calcium et un liquide, éventuellement en combinaison avec des additifs supplémentaires, caractérisé en ce quelle est constituée par un mélange de sulfate de calcium dihydraté et d'anhydrite de sulfate de calcium dans un rapport de 90—65/10—35, mélange auquel on ajoute de l'eau ou une solution aqueuse en une quantité de 50—110 ml de $H_2O$ pour 100 g du mélange de gypses.

2. Composition de mastic suivant la revendication 1, caractérisé en ce qu'on inclut du sulfate de potassium, du sulfate d'ammonium, du sulfate d'aluminium et/ou un autre sel durcissant en une quantité allant jusqu'à 4% par rapport à la quantité du gypse présent.

3. Composition de mastic suivant la revendication 1, caractérisé en ce qu'elle comprend une substance à base de fibres de bois en une quantité allant jusqu'à 1% de la quantité du gypse présent.

4. Composition de mastic suivant la revendication 1, caractérisé en ce qu'elle comprend un polyélectrolyte et/ou un produit à base d'amidon de cellulose en une quantité allant jusqu'à 1% par rapport à la quantité du gypse présent.

5. Composition de mastic suivant la revendication 1, caractérisé en ce que le gypse dihydraté est présent, totalement ou partiellement, sous la forme de cristaux de gypse dihydraté aciculaire, et en ce que l'anhdrite de gypse est présent sous la forme de particules.

6. Composition de mastic suivant la revendication 1, caractérisé en ce que la solution aqueuse est présente sous la forme d'un pigment d'acrylate à base d'eau.

7. Composition de mastic suivant la revendication 1, caractérisé en ce que le gypse dihydraté est présent sous la forme de particules, et en ce que l'anhydrite de gypse est présent totalement ou partiellement sous la forme de cristaux aciculaires.

8. Composition de mastic suivant la revendication 1 ou 2, caractérisé en ce qu'on ajoute de l'acide phosphorique jusqu'à un pH de 3—5.